# EUROPEAN PATENT APPLICATION

(11) **EP 4 715 936 A1**
(43) Date of publication of application: **25.03.2026**
(21) Application number: 23940035.1
(22) Date of filing: 05.06.2023
(51) Int. Cl.: H01M 10/0567, H01M 10/052

(54) **NON-AQUEOUS ELECTROLYTE, SECONDARY BATTERY, AND ELECTRICAL APPARATUS**

(71) Applicant: Contemporary Amperex Technology Co., Limited, Ningde, Fujian 352100 (CN)
(72) Inventor: REN, Jiamo, Ningde, Fujian 352100 (CN); CHEN, Peipei, Ningde, Fujian 352100 (CN); ZHANG, Limei, Ningde, Fujian 352100 (CN); LIU, Jiao, Ningde, Fujian 352100 (CN)
(74) Representative: Lorenz Seidler Gossel Part. mbB
(86) International application number: PCT/CN2023/098274
(87) International publication number: WO 2024/250136

(57) **Abstract**

The present application relates to the technical field of batteries, and to a non-aqueous electrolyte, a secondary battery and an electrical apparatus. The non-aqueous electrolyte comprises a cyclic sulfate additive and a phosphate or isocyanate additive. The present application further relates to a secondary battery comprising the non-aqueous electrolyte, and an electrical apparatus comprising the secondary battery.

## Description

### TECHNICAL FIELD

The present application relates to the technical field of batteries, and in particular to a non-aqueous electrolyte, a secondary battery and an electrical apparatus.

### BACKGROUND

As environmental problems become more serious, the world's pursuit of "carbon neutral" drives all industries to develop in a greener and healthier direction. As a cleaner energy storage apparatus, lithium-ion secondary batteries are widely used in energy storage power systems such as water power, thermal power, wind power and solar power stations, as well as in electric vehicles, military equipment, aerospace and other fields. In this context, from the period of "12th Five-Year Plan", China has introduced a number of policies to vigorously support the development of new energy-related industries. With the rapid development of the industries, the new energy field develops steadily in China, and a number of enterprises are at the forefront of the new energy battery industry. However, the market competition is increasingly fierce, consumers and investors put forward higher requirements on the cycling performance and safety performance of batteries.

### SUMMARY

In the field of lithium secondary batteries for automotive use, people pay more attention to the range and cycle life of batteries. In order to achieve better range, at the cell level, researchers have tried to increase energy density of batteries by using positive and negative electrodes with higher compacted density. However, this will also bring some problems: higher compacted density will greatly reduce porosity of electrode plates, making it more difficult for electrolytes to infiltrate the electrode plates, which is prone to an increase in polarization of the electrode plates to increase impedance. In addition, positive and negative electrode particles may be damaged after high-pressure extrusion, causing problems such as dissolution of transition metal and violent reactions at negative electrode interfaces. These problems will lead to significant shortening of the cycle life of batteries.

In order to solve the above problems, the present application provides a non-aqueous electrolyte. By introducing a cyclic sulfonate additive and a phosphate or isocyanate additive, problems such as shortened life of a battery caused by the high compacted density of positive and negative electrode plates are alleviated, and a lithium-ion secondary battery with high energy density and long life is obtained.

A first aspect of the present application provides a non-aqueous electrolyte, the non-aqueous electrolyte including a first additive and a second additive, the first additive being a cyclic sulfate compound having a structure represented by general formula (I), 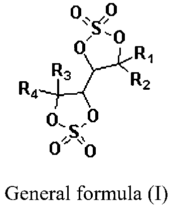 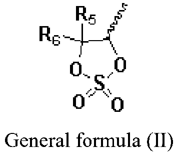
in the general formula (I), R₁, R₂, R₃ and R₄ are each independently selected from any one of a group having a structure represented by general formula (II), a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and
in the general formula (II), R₅ and R₆ are each independently selected from any one of a group having the structure represented by the general formula (II), a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group;
R₁ and R₂ are not both hydrogen atoms and R₃ and R₄ are not both hydrogen atoms;
the second additive is selected from a phosphate compound, an isocyanate compound or a combination thereof;
the phosphate compound has a structure represented by general formula (III): 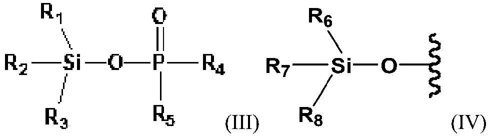
in the general formula (III), R₁, R₂, R₃, R₄ and R₅ are each independently selected from any one of a group having a structure represented by general formula (IV), a hydrogen atom, a C1-C6 alkyl group, a halogen atom, a C1-C6 haloalkyl group, a C1-C6 alkoxy group, a C1-C6 haloalkoxy group, a C6-C10 aryl group, a C2-C6 alkenyl group, a C2-C6 ester group, a cyano group, a hydroxy group, a sulfonic acid group, and a tris(C1-C6 alkyl)silyl group;
in the general formula (IV), R₆, R₇, and R₈ are each independently selected from any one of a hydrogen atom, a C1-C6 alkyl group, a halogen atom, a C1-C6 haloalkyl group, a C1-C6 alkoxy group, a C1-C6 haloalkoxy group, a C6-C10 aryl group, a C2-C6 alkenyl group, a C2-C6 ester group, a cyano group, and a sulfonic acid group;
the isocyanate compound has a structure represented by general formula (V): 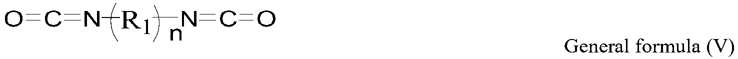
in the general formula (V), R₁ is selected from the following groups which are unsubstituted or substituted by one or more Rₐ: a C2-C10 alkylene group, a C2-C10 heteroalkylene group, a C6-C18 arylene group, a C2-C18 heteroarylene group, a C3-C18 alicyclylene group, and a C3-C18 heteroalicyclylene group,
the one or more Rₐ are each independently selected from a halogen atom, -CN, -NCO, -OH, -COOH, -SOOH, a C2-C10 ester group, a C1-C10 alkyl group, a C2-C10 alkenyl group, a C2-C10 alkynyl group, and a C2-C10 alkoxy group; and
in the general formula (V), n is 1, 2 or 3.

**In** some embodiments, in the cyclic sulfate compound, R¹, R², R³ and R⁴ are each independently selected from any one of a group having a structure represented by the general formula (II), a hydrogen atom, a halogen atom, a C1-C3 alkyl group, a C1-C3 haloalkyl group, a C1-C3 alkoxy group, a C1-C3 haloalkoxy group, a C2-C3 alkenyl group, a C2-C3 ester group, a cyano group and a sulfonic acid group, and
in the cyclic sulfate compound, R⁵ and R⁶ are each independently selected from any one of a hydrogen atom, a halogen atom, a C1-C3 alkyl group, a C1-C3 haloalkyl group, a C1-C3 alkoxy group, a C1-C3 haloalkoxy group, a C2-C3 alkenyl group, a C2-C3 ester group, a cyano group and a sulfonic acid group.

In some embodiments, in the cyclic sulfate compound, R¹, R², R³and R⁴ are each independently selected from any one of a group having a structure represented by the general formula (II), a hydrogen atom, a halogen atom, a C1-C3 alkyl group and a cyano group.

In some embodiments, in the cyclic sulfate compound, R⁵and R⁶ are each independently selected from any one of a hydrogen atom and a C1-C3 alkyl group.

In some embodiments, in the cyclic sulfate compound, R¹, R², R³ and R⁴ are each independently selected from any one of a group having a structure represented by the general formula (II), a hydrogen atom, an F atom, a Cl atom, a Br atom, a methyl group, an ethyl group, a propyl group, an isopropyl group and a cyano group.

In some embodiments, in the cyclic sulfate compound, R⁵ and R⁶ are each independently selected from any one of a hydrogen atom, a methyl group, an ethyl group, a propyl group and an isopropyl group.

In some embodiments, the group having the structure represented by the general formula (II) is selected from any one of the following groups: 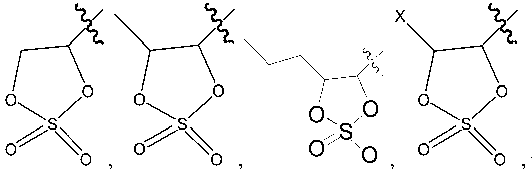 wherein X is a F atom, a Cl atom or a Br atom.

In some embodiments, the group having the structure represented by the general formula (II) is selected from any one of the following groups:

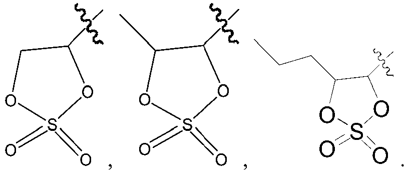

In some embodiments, the cyclic sulfate compound is selected from any one or more of the following compounds:

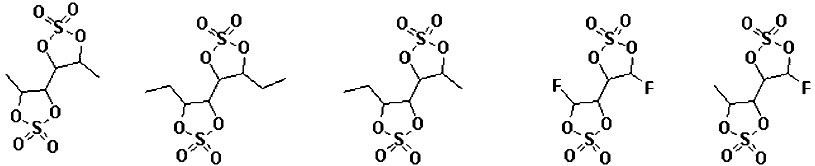

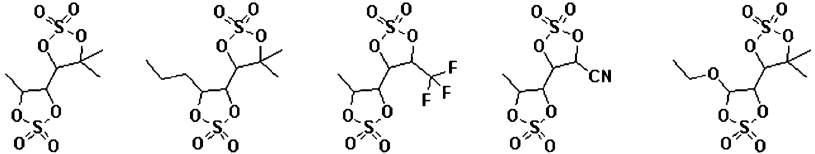

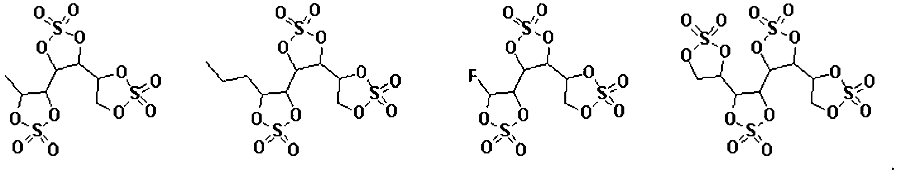

In some embodiments, mass content of the cyclic sulfate compound in the non-aqueous electrolyte is W1, wherein 0.005%≤W1≤10%, and optionally 0.05%≤W1≤5%.

In some embodiments, in the phosphate compound, R₁, R₂, R₃, R₄ and R₅ are each independently selected from any one of a group having a structure represented by the general formula (IV), a hydrogen atom, a C1-C3 alkyl group, a halogen atom, a C1-C3 haloalkyl group, a C1-C3 alkoxy group, a C1-C3 haloalkoxy group, a C6-C10 aryl group, a C2-C3 alkenyl group, a C2-C3 ester group, a cyano group, a hydroxy group, a sulfonic acid group and a tris(C1-C3 alkyl)silyl group;
and in the general formula (IV), R₆, R₇ and R₈ are each independently selected from any one of a hydrogen atom, a C1-C3 alkyl group, a halogen atom, a C1-C3 haloalkyl group, a C1-C3 alkoxy group, a C1-C3 haloalkoxy group, a C6-C10 aryl group, a C2-C3 alkenyl group, a C2-C3 ester group, a cyano group and a sulfonic acid group.

In some embodiments, in the phosphate compound, R₁, R₂, R₃, R₄, and R₅ are each independently selected from any one of a group having a structure represented by the general formula (IV), a hydrogen atom, a C1-C3 alkyl group, a halogen atom, a C1-C3 alkoxy group, and a tri(C1-C3 alkyl)silyl group.

In some embodiments, in the general formula (IV), R₆, R₇ and R₈ are each independently selected from any one of a hydrogen atom, a C1-C3 alkyl group, and a C1-C3 alkoxy group.

In some embodiments, the group having the structure represented by the general formula (IV) is selected from any one of the following groups:

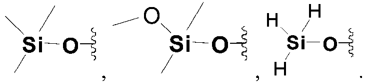

In some embodiments, the phosphate compound is selected from any one or more of the following compounds:

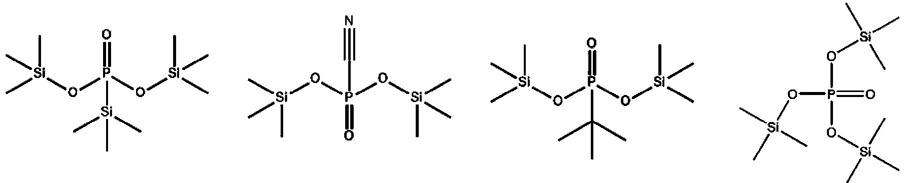

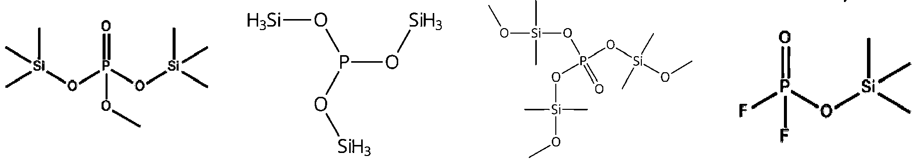

In some embodiments, in the isocyanate compound, R₁ is selected from the following groups which are unsubstituted or substituted by one or more Rₐ: a C2-C6 alkylene group, a C2-C6 heteroalkylene group, a C6-C10 arylene group, a C2-C10 heteroarylene group, a C4-C6 alicyclylene group and a C4-C6 heteroalicyclylene group.

In some embodiments, the one or more Rₐ are each independently selected from a halogen atom, -CN, -NCO, -OH, -COOH, -SOOH, a C2-C6 ester group, a C1-C6 alkyl group, a C2-C6 alkenyl group, a C2-C6 alkynyl group and a C2-C6 alkoxy group.

In some embodiments, the one or more Rₐ are each independently selected from a halogen atom, -CN, -NCO, -OH, -COOH, -SOOH, a C2-C3 ester group, a C1-C3 alkyl group, a C2-C3 alkenyl group, a C2-C3 alkynyl group and a C2-C3 alkoxy group.

In some embodiments, in the isocyanate compound, R₁ is selected from the following groups which are unsubstituted or substituted by one or more Rₐ: a C2-C6 alkylene group, a C6-C10 arylene group and a C4-C6 alicyclylene group; the one or more Rₐ are each independently selected from a halogen atom and C1-C3 alkyl group.

In some embodiments, the isocyanate compound is selected from any one or more of the following compounds:

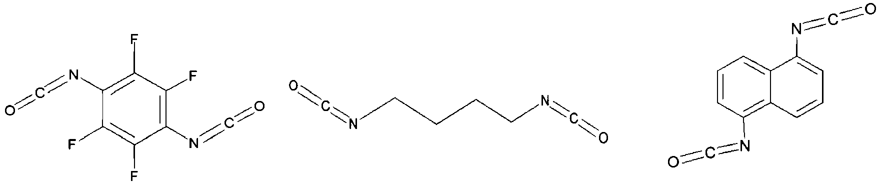

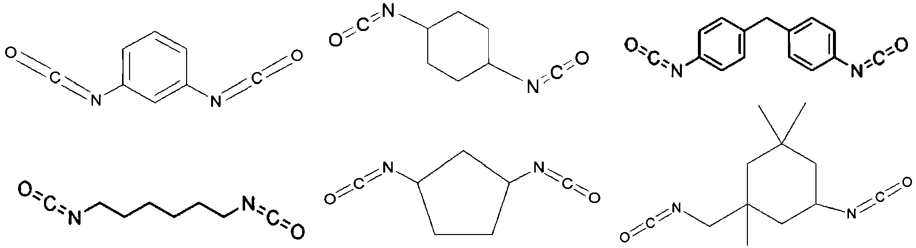

In some embodiments, mass content of the second additive in the non-aqueous electrolyte is W2, wherein 0.01%≤W2≤10%, optionally 0.1%≤W2≤8%, and further optionally 0.3%≤W2≤5%.

A second aspect of the present application provides a secondary battery, including the non-aqueous electrolyte as described in the first aspect of the present application, and further including a positive electrode plate and a negative electrode plate, wherein the negative electrode plate includes a negative electrode material layer containing a negative electrode active material.

In some embodiments, the negative electrode material layer has a porosity of 30-45%, optionally 37-42%.

In some embodiments, the negative electrode active material has an average particle size Dv50 of 3-25 µm, optionally 5 µm ≤ Dv50 ≤ 20 µm, and further optionally 7 µm ≤ Dv50 ≤ 15 µm.

In some embodiments, coating weight per unit area of the negative electrode plate is CW, wherein 2 mg/cm² ≤ CW ≤ 13 mg/cm², and optionally, 5 mg/cm² ≤ CW ≤ 10 mg/cm².

A third aspect of the present application provides an electrical apparatus, including a secondary battery, wherein the secondary battery includes any of the secondary batteries as described in the second aspect of the present application.

The non-aqueous electrolyte provided in the present application can prolong the cycle and storage life of the secondary battery at high temperatures.

### DESCRIPTION OF THE DRAWINGS

In order to illustrate the technical solutions of the embodiments of the present application more clearly, the following briefly introduces the drawings required in the embodiments of the present application. Apparently, the drawings described below are only some embodiments of the present application. For those of ordinary skill in the art, other drawings can also be obtained according to the drawings without any creative effort.
Fig. 1 is a schematic diagram of a secondary battery according to an embodiment of the present application;
FIG. 2 is an exploded view of the secondary battery according to an embodiment of the present application shown in Fig. 1;
Fig. 3 is a schematic diagram of a battery module according to an embodiment of the present application;
Fig. 4 is a schematic diagram of a battery pack according to an embodiment of the present application;
Fig. 5 is an exploded view of the battery pack according to an embodiment of the present application shown in Fig. 4;
Fig. 6 is a schematic diagram of an electrical apparatus in which a secondary battery is used as a power source according to an embodiment of the present application.

In the drawings, the drawings are not drawn to actual scale.

Description of reference numerals:
1. Battery pack; 2. Upper box; 3. Lower box; 4. Battery module; 5. Secondary battery; 51. Case; 52. Electrode assembly; 53. Top cover assembly.

### DETAILED DESCRIPTION

Embodiments of the present application are described in further detail below in conjunction with the drawings and embodiments. The following detailed description of the examples and the drawings are used to illustrate the principles of the present application by way of example, but should not be used to limit the scope of the present application, that is, the present application is not limited to the described examples.

Hereinafter, embodiments of a non-aqueous electrolyte, a secondary battery and an electrical apparatus of the present application are described in detail and specifically disclosed with reference to the drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application can be combined with each other form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method includes steps (a) and (b), meaning that the method may include steps (a) and (b) performed sequentially, or may include steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

### [Non-aqueous electrolyte]

A first aspect of the present application provides a non-aqueous electrolyte, the non-aqueous electrolyte including a first additive and a second additive, the first additive being a cyclic sulfate compound having a structure represented by general formula (I), 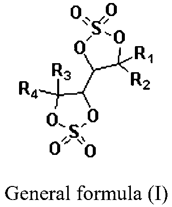 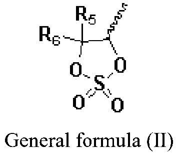
in the general formula (I), R₁, R₂, R₃ and R₄ are each independently selected from any one of a group having a structure represented by the general formula (II), a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and
in the general formula (II), R₅ and R₆ are each independently selected from any one of a group having the structure represented by the general formula (II), a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group;
R₁ and R₂ are not both hydrogen atoms and R₃ and R₄ are not both hydrogen atoms;
the second additive is selected from a phosphate compound, an isocyanate compound or a combination thereof;
the phosphate compound has a structure represented by general formula (III): 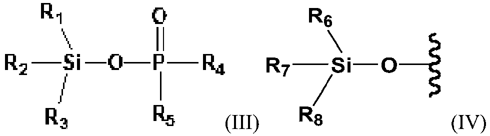
in the general formula (III), R₁, R₂, R₃, R₄ and R₅ are each independently selected from any one of a group having a structure represented by general formula (IV), a hydrogen atom, a C1-C6 alkyl group, a halogen atom, a C1-C6 haloalkyl group, a C1-C6 alkoxy group, a C1-C6 haloalkoxy group, a C6-C10 aryl group, a C2-C6 alkenyl group, a C2-C6 ester group, a cyano group, a hydroxy group, a sulfonic acid group, and a tris(C1-C6 alkyl)silyl group;
in the general formula (IV), R₆, R₇, and R₈ are each independently selected from any one of a hydrogen atom, a C1-C6 alkyl group, a halogen atom, a C1-C6 haloalkyl group, a C1-C6 alkoxy group, a C1-C6 haloalkoxy group, a C6-C10 aryl group, a C2-C6 alkenyl group, a C2-C6 ester group, a cyano group, and a sulfonic acid group;
the isocyanate compound has a structure represented by general formula (V): 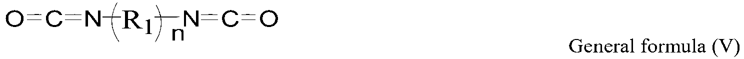
in the general formula (V), R₁ is selected from the following groups which are unsubstituted or substituted by one or more Rₐ: a C2-C10 alkylene group, a C2-C10 heteroalkylene group, a C6-C18 arylene group, a C2-C18 heteroarylene group, a C3-C18 alicyclylene group, and a C3-C18 heteroalicyclylene group,
the one or more Rₐ are each independently selected from a halogen atom, -CN, -NCO, -OH, -COOH, -SOOH, a C2-C10 ester group, a C1-C10 alkyl group, a C2-C10 alkenyl group, a C2-C10 alkynyl group, and a C2-C10 alkoxy group; and
in the general formula (V), n is 1, 2 or 3.

In some embodiments, in the cyclic sulfate compound, R¹, R², R³ and R⁴ are each independently selected from any one of a group having a structure represented by the general formula (II), a hydrogen atom, a halogen atom, a C1-C3 alkyl group, a C1-C3 haloalkyl group, a C1-C3 alkoxy group, a C1-C3 haloalkoxy group, a C2-C3 alkenyl group, a C2-C3 ester group, a cyano group and a sulfonic acid group, and
in the cyclic sulfate compound, R⁵ and R⁶ are each independently selected from any one of a hydrogen atom, a halogen atom, a C1-C3 alkyl group, a C1-C3 haloalkyl group, a C1-C3 alkoxy group, a C1-C3 haloalkoxy group, a C2-C3 alkenyl group, a C2-C3 ester group, a cyano group and a sulfonic acid group.

The non-aqueous electrolyte provided in the present application contains a variety of additives. A cyclic sulfate additive may be involved in film formation at a negative electrode interface during the first charging process. The film is formed by mixing an inorganic component and an organic component. SEI formed by the cyclic sulfate additive has a more compact structure and a stronger ability to conduct Li⁺, and accordingly has the characteristic of reducing the negative interface impedance. In addition, the SEI film has a strong protection capacity for the negative electrode, which can improve the cycle and storage capacity of a battery at high temperatures. However, at high temperatures, LiPF₆ is prone to decomposition to produce HF, causing continuous damage to the SEI. The introduction of the phosphate or isocyanate additive in the electrolyte may reduce acid content in the electrolyte and prolong the cycle and storage life of the battery at high temperatures.

Cyclic sulfate rings used in the present application are all five-membered rings, which may form a more compact SEI film.

In the general formula (I), R¹, R², R³ and R⁴ may be substituents such as an alkyl group or an F-containing or an N-containing substituent, etc. By introducing the substituents such as an alkyl group, a flexible SEI film with longer organic chains may be generated on the negative electrode, which can cope with a volume change of the negative electrode during cycling to avoid damage to the SEI film. The substituents such as the F-Containing or N-Containing substituent may be involved in film formation on the negative electrode, to generate an SEI film enriched with more inorganic components such as LiF and Li₃, thus increasing mechanical strength of the SEI film, improving stability of the SEI film on the negative electrode, and achieving the purpose of further improving the cycling performance of the battery.

The above-mentioned alkyl group may be a straight-chain alkyl group, a branched-chain alkyl group, or a cycloalkyl group, including but not limited to a methyl group, an ethyl group, a propyl group, an isopropyl group, an n-butyl group, an isobutyl group, a cyclopropyl group, a cyclobutyl group, and the like. The alkyl group of the above-mentioned haloalkyl group includes, but is not limited to, a straight-chain alkyl group, a branched-chain alkyl group, or a cycloalkyl group, such as a methyl group, an ethyl group, a propyl group, an isopropyl group, an n-butyl group, an isobutyl group, a cyclopropyl group, and a cyclobutyl group. The halogen atom may be a fluorine atom, a chlorine atom or a bromine atom, and the halogen atom substitutes any one or more hydrogen atoms of the alkyl group. The above-mentioned alkoxy group includes, but is not limited to, a cyclopropanediyl group, an oxetanediyl group, and the like. The halogen atom of the haloalkoxy group may be a fluorine, chlorine or bromine atom, and the halogen atom substitutes any one or more hydrogen atoms of the alkoxy group. The alkenyl group includes, but is not limited to, -CH=CH₂, -CH=CH₂CH₃, -CH₂CH=CH₂, and -CH₂CH=CH₂CH₃. The ester group includes, but is not limited to, methyl formate, ethyl formate, ethyl acetate, methyl propionate, ethyl propionate, propyl propionate, and the like.

In some embodiments, in the cyclic sulfate compound, R¹, R², R³and R⁴ are each independently selected from any one of a group having a structure represented by the general formula (II), a hydrogen atom, a halogen atom, a C1-C3 alkyl group and a cyano group.

In some embodiments, in the cyclic sulfate compound, R⁵and R⁶ are each independently selected from any one of a hydrogen atom and a C1-C3 alkyl group.

In some embodiments, in the cyclic sulfate compound, R¹, R², R³ and R⁴ are each independently selected from any one of a group having a structure represented by the general formula (II), a hydrogen atom, an F atom, a Cl atom, a Br atom, a methyl group, an ethyl group, a propyl group, an isopropyl group and a cyano group.

In some embodiments, in the cyclic sulfate compound, R⁵ and R⁶ are each independently selected from any one of a hydrogen atom, a methyl group, an ethyl group, a propyl group and an isopropyl group.

In some embodiments, the group having the structure represented by the general formula (II) is selected from any one of the following groups: 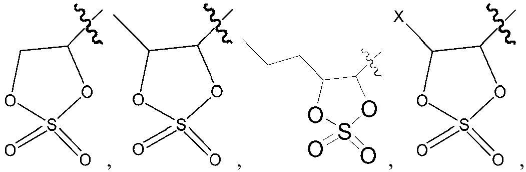 wherein X is a F atom, a Cl atom or a Br atom.

In some embodiments, the group having the structure represented by the general formula (II) is selected from any one of the following groups:

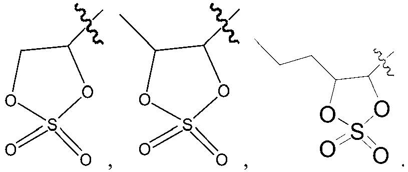

In some embodiments, the cyclic sulfate compound is selected from any one or more of the following compounds:

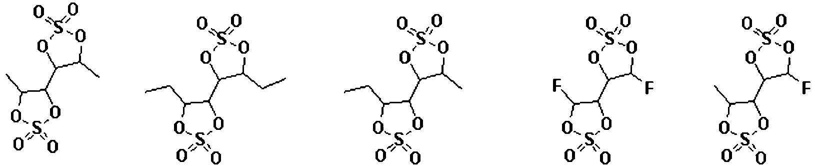

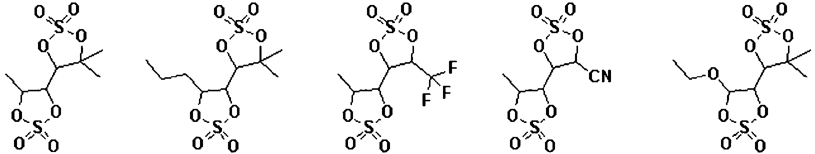

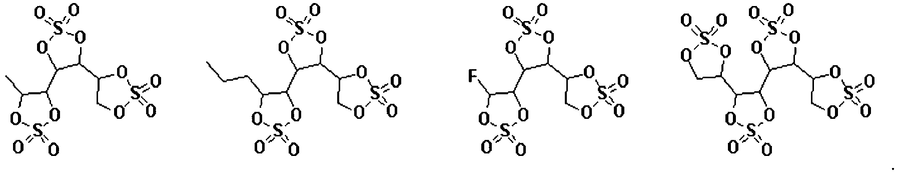

A method for preparing the cyclic sulfate compound is simpler, is easier to promote and implement in industry, and has a more stable effect on improving the cycle and storage performance of the secondary battery.

In some embodiments, in the cyclic sulfate compound, R¹, R², R³, R⁴, R⁵ and R⁶ satisfy the following conditions:
R¹ and R² are both hydrogen atoms, and one of R³ and R⁴ is a hydrogen atom and the other is any one of a group having a structure represented by the general formula (II), a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group, and a sulfonic acid group. R⁵ and R⁶ in the group having the structure represented by the general formula (II) are not both hydrogen atoms.

In some embodiments, in the cyclic sulfate compound, R¹, R², R³, R⁴, R⁵ and R⁶ satisfy the following conditions:
R³ and R⁴ are both hydrogen atoms, and one of R¹ and R² is a hydrogen atom and the other is any one of a group having a structure represented by the general formula (II), a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group, and a sulfonic acid group. R⁵ and R⁶ in the group having the structure represented by the general formula (II) are not both hydrogen atoms.

In some embodiments, in the cyclic sulfate compound, R⁵ and R⁶ are each independently selected from a group other than the structural group represented by the general formula (II).

**In** some embodiments, mass content of the cyclic sulfate compound **in** the non-aqueous electrolyte is W1, wherein 0.005%≤W1≤10%, and optionally 0.05%≤W1≤5%. When mass percent of a cyclic sulfonate additive in the electrolyte is within the above preferred range, a battery cell will have good cycle and storage performance.

In some embodiments, W1 may be less than 0.001%, or may be 0.001-0.005%, 0.005-0.01%, 0.01-0.05%, 0.05-0.1%, 0.1-0.2%, 0.2-0.3%, 0.3-0.5%, 0.5-1%, 1-2%, 2-3%, 3-4%, 4-5%, 5-8%, 8-10%, and 10-15%, or may be greater than 15%.

The method for preparing the cyclic sulfate compound having the structure represented by the general formula (I) **in** the present application is referred to the following synthetic route:

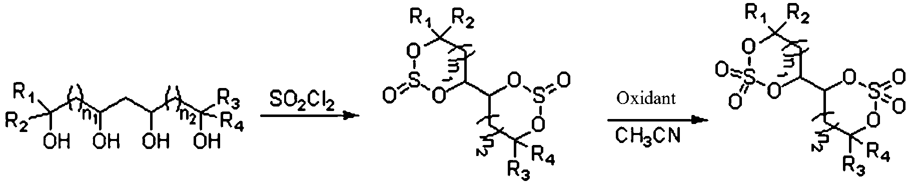

The reaction temperature of the first step is controlled at 30-60°C; the reaction temperature of the second step is controlled at 10-30°C. In the second step, a catalyst such as ruthenium(III) chloride hydrate is used for catalysis, and an oxidant may be sodium hypochlorite, ozone, and the like.

In some embodiments, in the phosphate compound, R₁, R₂, R₃, R₄ and R₅ are each independently selected from any one of a group having a structure represented by the general formula (IV), a hydrogen atom, a C1-C3 alkyl group, a halogen atom, a C1-C3 haloalkyl group, a C1-C3 alkoxy group, a C1-C3 haloalkoxy group, a C6-C10 aryl group, a C2-C3 alkenyl group, a C2-C3 ester group, a cyano group, a hydroxy group, a sulfonic acid group and a tris(C1-C3 alkyl)silyl group;
and in the general formula (IV), R₆, R₇ and R₈ are each independently selected from any one of a hydrogen atom, a C1-C3 alkyl group, a halogen atom, a C1-C3 haloalkyl group, a C1-C3 alkoxy group, a C1-C3 haloalkoxy group, a C6-C10 aryl group, a C2-C3 alkenyl group, a C2-C3 ester group, a cyano group and a sulfonic acid group.

In some embodiments, in the phosphate compound, R₁, R₂, R₃, R₄, and R₅ are each independently selected from any one of a group having a structure represented by the general formula (IV), a hydrogen atom, a C1-C3 alkyl group, a halogen atom, a C1-C3 alkoxy group, and a tri(C1-C3 alkyl)silyl group.

In some embodiments, in the general formula (IV), R₆, R₇ and R₈ are each independently selected from any one of a hydrogen atom, a C1-C3 alkyl group, and a C1-C3 alkoxy group.

In some embodiments, the group having the structure represented by the general formula (IV) is selected from any one of the following groups:

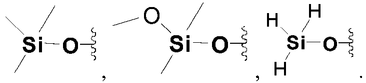

In some embodiments, the phosphate compound is selected from any one or more of the following compounds:

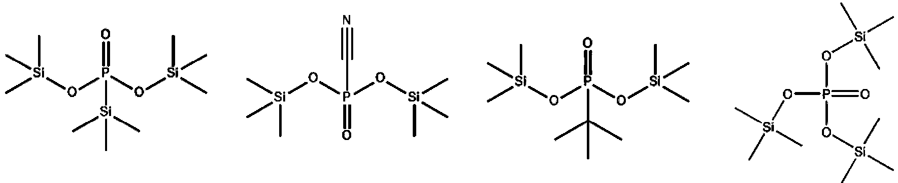

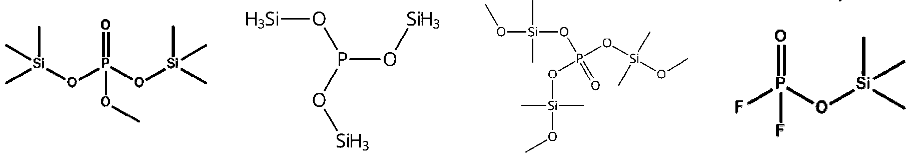

In some embodiments, in the isocyanate compound, R₁ is selected from the following groups which are unsubstituted or substituted by one or more Rₐ: a C2-C6 alkylene group, a C2-C6 heteroalkylene group, a C6-C10 arylene group, a C2-C10 heteroarylene group, a C4-C6 alicyclylene group and a C4-C6 heteroalicyclylene group.

In some embodiments, the one or more Rₐ are each independently selected from a halogen atom, -CN, -NCO, -OH, -COOH, -SOOH, a C2-C6 ester group, a C1-C6 alkyl group, a C2-C6 alkenyl group, a C2-C6 alkynyl group and a C2-C6 alkoxy group.

In some embodiments, the one or more Rₐ are each independently selected from a halogen atom, -CN, -NCO, -OH, -COOH, -SOOH, a C2-C3 ester group, a C1-C3 alkyl group, a C2-C3 alkenyl group, a C2-C3 alkynyl group and a C2-C3 alkoxy group.

In some embodiments, in the isocyanate compound, R₁ is selected from the following groups which are unsubstituted or substituted by one or more Rₐ: a C2-C6 alkylene group, a C6-C10 arylene group and a C4-C6 alicyclylene group; the one or more Rₐ are each independently selected from a halogen atom and C1-C3 alkyl group.

In some embodiments, the isocyanate compound is selected from any one or more of the following compounds:

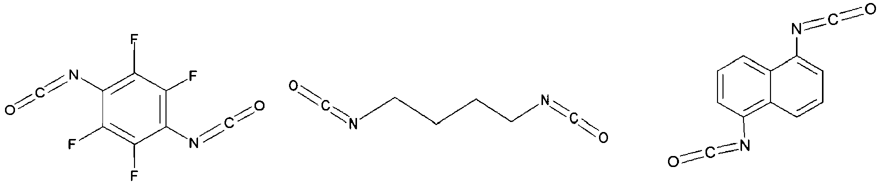

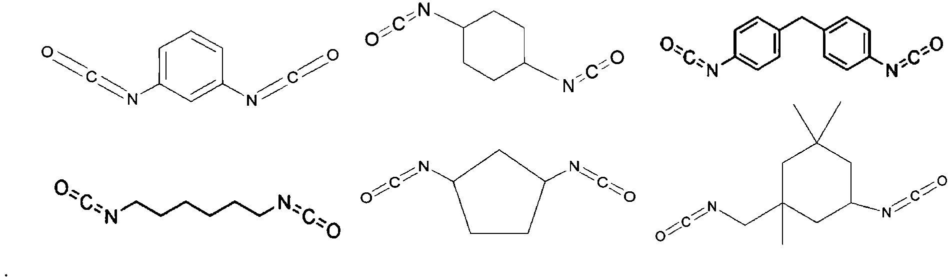

The method for preparing the phosphate or isocyanate compound is simpler, is easier to promote and implement in industry, and has a more stable effect on improving the cycle and storage performance of the secondary battery.

In some embodiments, mass content of the second additive in the non-aqueous electrolyte is W2, wherein 0.01%≤W2≤10%, optionally 0.1%≤W2≤8%, and further optionally 0.3%≤W2≤5%. When mass percent of the second additive in the electrolyte is within the above preferred range, the battery cell will have good cycle and storage performance.

In some embodiments, W2 may be less than 0.001%, or may be 0.001-0.005%, 0.005-0.01%, 0.01-0.05%, 0.05-0.1%, 0.1-0.2%, 0.2-0.3%, 0.3-0.5%, 0.5-1%, 1-2%, 2-3%, 3-4%, 4-5%, 5-6%, 6-8%, 8-9%, 9-10% and 10-12%, or may be greater than 12%.

In some embodiments, the non-aqueous electrolyte used in the present invention further includes an electrolyte. Any electrolyte that can be commonly used in non-aqueous electrolytes can be considered for use in the non-aqueous electrolyte of the present application. Those skilled in the art may select an electrolyte based on a battery system to which the non-aqueous electrolyte is applied, such as selecting a conventional electrolyte applicable to the secondary battery. In some embodiments, the electrolyte includes an alkali metal salt electrolyte; the electrolyte contains a lithium salt; optionally, the lithium salt includes one or more selected from the group consisting of lithium hexafluorophosphate, lithium perchlorate, lithium hexafluoroarsenate, lithium bis(fluorosulfonyl)imide and lithium bis(trifluoromethanesulfonyl)imide. The above-mentioned lithium salts may be used alone or in combination of two or more thereof.

The content of electrolyte in the non-aqueous electrolyte may be referenced to the content of electrolyte in a conventional non-aqueous electrolyte. In some embodiments, the content of electrolyte in the non-aqueous electrolyte is 0.1-5 mol/L, for example, may be 0.1 mol/L, 0. 3 mol/L, 0.5 mol/L, 0.6 mol/L, 0.7 mol/L, 0.8 mol/L, 0.9 mol/L, 1 mol/L, 1.5 mol/L, 2 mol/L, 2.5mol/L, 3mol/L, 4mol/L or 5mol/L. In some embodiments, the non-aqueous electrolyte further includes a non-aqueous solvent, optionally the non-aqueous solvent includes any one or more selected from the group consisting of cyclic carbonate, chain carbonate, a nitrile solvent, a ketone solvent, and a sulfone solvent. Further, the non-aqueous solvent optionally includes at least one or more selected from the group consisting of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone, diethyl sulfone, tetrahydrofuran, ethylene glycol dimethyl ether, dioxin, acetone, acetonitrile, and nitrile. The above-mentioned non-aqueous solvents may be used alone or in combination of two or more. For example, in order to improve the load characteristic and low-temperature characteristic of the secondary battery, a mixed solvent of cyclic carbonate and chain carbonate may be used. In some embodiments, EC+EMC (ethylene carbonate+ethyl methyl carbonate) is used as the non-aqueous solvent.

When the non-aqueous electrolyte of the present application is applied to a solid battery, a solid solvent such as dimethyl sulfone may be used.

In addition to the above additives, the additives may further include a negative electrode film-forming additive or a positive electrode film-forming additive, or may further include an additive that can improve some performance of the battery, such as an additive that improves overcharge performance of the battery or an additive that improves high-temperature or low-temperature performance of the battery. In some embodiments of the present application, the above additives further include, but are not limited to, one or more selected from the group consisting of a sulfate compound, a sulfite compound, a sultone compound, a disulfonic acid compound, a nitrile compound, an aromatic compound, an isocyanate compound, a phosphazene compound, a cyclic anhydride compound, a phosphite compound, a phosphate compound, a borate compound, and a carboxylate compound.

### [Secondary battery]

A second aspect of the present application provides a secondary battery. The secondary battery also known as a rechargeable battery or a storage battery refers to a battery that can be used continually by activating an active material in a charging manner after the battery is discharged. Generally, the secondary battery includes a positive electrode plate, a negative electrode plate, a separator and an electrolyte. During charging and discharging of the battery, active ions (e.g., lithium ions) are intercalated and deintercalated back and forth between the positive electrode plate and the negative electrode plate. The separator is arranged between the positive electrode plate and the negative electrode plate, and mainly functions to prevent a short circuit between the positive electrode and the negative electrode while allowing active ions to pass through. The electrolyte mainly serves to conduct active ions between the positive electrode plate and the negative electrode plate.

### [Negative electrode plate]

The secondary battery provided in the present application may include a negative electrode plate, the negative electrode plate includes a negative electrode active material layer, and the negative electrode active material layer includes a negative electrode active material.

Porosity of the negative electrode material layer represents the number of pores among particles inside an electrode plate. In some embodiments, the negative electrode material layer has a porosity of 30-45%, optionally 37-42%. When the porosity of the negative electrode material layer is within the above range, the number of pores among particles inside of the electrode plate is appropriate, the particle structure is less prone to damage by extrusion, the electrolyte infiltration is good, the long-term cycling performance of the battery cell is good, while the energy density of the battery cell is not affected.

In some embodiments, the porosity of the negative electrode material layer is less than 25%, or is 25-30%, 30-35%, 35-37%, 37-39%, 39-40%, 40-42%, 42-44%, 44-45% and 45-48%, or is greater than 48%.

The porosity Pₙ of the negative electrode plate may be obtained by a gas filling method. For example, He gas may be filled into the pores of the negative electrode plate to measure real volume V₂ of the negative electrode plate; then, apparent volume_{V1}of the negative electrode plate can be calculated based on the coating weight of the negative electrode plate and the compacted density of the negative electrode plate, thus the porosity _{Pn} of the negative electrode plate is = (_{V1}-_{V2})/_{V1}×100%

The particle size of the positive electrode active material may be denoted as Dv50, which refers to the particle size that corresponds to a cumulative volume percentage of 50%, i.e., the median particle size of the volume distribution. In some embodiments, the negative electrode active material used in the present application has an average particle size Dv50 of 3-25 µm, optionally 5 µm ≤ Dv50 ≤ 20 µm, and further optionally 7 µm ≤ Dv50 ≤ 15 µm. When Dv50 of the negative electrode active material is within the above preferred range, it is beneficial to form a uniform surface in the process of preparing the electrode plate by coating, and is also beneficial to reduce side reactions between the electrode and the electrolyte, reduce the loss of initial battery capacity, and enable the battery to perform better.

In some embodiments, Dv50 may be less than 0.5 µm, or may be 0.5-1 µm, 1-1.5 µm, 1.5-2 µm, 2-3 µm, 3-5 µm, 5-7 µm, 7-10 µm, 10-15 µm, 15-18 µm, 18-20 µm, 20-22 µm, 22-25 µm, and 25-30 µm, or may be greater than 30 µm.

Dv50 may be measured by instruments and methods known in the art. For example, a laser diffraction particle size distribution analyzer (Malvern Mastersizer 3000) from Malvern Instruments Ltd. in the UK is used for testing, and Dv50 may be obtained by measuring the particle size distribution according to Particle Size Analysis - Laser Diffraction Methods GB/T19077-2016.

The negative electrode plate may be prepared by coating a surface of a negative electrode current collector with a negative electrode slurry. The coating weight per unit area of the electrode plate represents dry weight of the slurry applied on the surface of the current collector per unit area. In some embodiments, the coating weight per unit area of the negative electrode plate is CW, wherein 2 mg/cm² ≤ CW ≤ 13 mg/cm², optionally, 5 mg/cm² ≤ CW ≤ 10 mg/cm². When the coating weight per unit area of a negative electrode film is within the above range, the energy density of the battery may not be affected in the case of the battery having good kinetic performance.

In some embodiments, CW may be less than 1.5 mg/cm², or may be 1.5 -2 mg/cm², 2-3 mg/cm², 3-5 mg/cm², 5-6 mg/cm², 6-8 mg/cm², 8-10 mg/cm², 10-12 mg/cm², 12-13 mg/cm², and 13-15 mg/cm², or may be greater than 15 mg/cm².

The coating weight per unit area of the electrode plate may be measured by the following method:
taking a number of pieces of current collector foils, wherein the area of each piece is S, weighing them respectively and taking their average value, which is recorded as M1; taking a plurality of electrode plates coated with the same weight of slurry, coating them uniformly, and then drying them for 1 hour at 120° C; after detecting that they are basically free of solvents, weighing the dried current collector foils coated with the slurry on single sides respectively, taking their average value, which is recorded as M2; and obtaining the coating weight of an active material layer on a single side of a current collector as CW = (M2-M1)/S.

The negative electrode plate may include a negative electrode current collector and a negative electrode material layer arranged on at least one surface of the negative electrode current collector. As an example, the negative electrode current collector has two surfaces opposite in its own thickness direction, and the negative electrode material layer is arranged on either one or both of the two opposite surfaces of the negative electrode current collector.

In some embodiments, the negative electrode current collector may be a metal foil or a composite current collector. For example, a copper foil may be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative electrode active material may include at least one of the following materials: graphite (e.g., artificial graphite and natural graphite), soft carbon, hard carbon, silicon-based material, tin-based material, and lithium titanate, etc. The silicon-based material may be selected from at least one of elemental silicon, a silicon-oxygen compound, a silicon-carbon compound, a silicon-nitrogen compound, and a silicon alloy. The tin-based material may be selected from at least one of elemental tin, tin-oxygen compound, and tin alloy. However, the present application is not limited to these materials, and other conventional materials useful as negative electrode active materials for batteries can also be used. These negative electrode active materials may be used alone or in combination of two or more thereof.

In some embodiments, the negative electrode material layer further optionally includes a binder. As an example, the binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode material layer further optionally includes a conductive agent. As an example, the conductive agent may be selected from at least one of superconducting carbon, acetylene black, carbon black, Ketjen black, carbon dot, carbon nanotube, graphene, and carbon nanofiber.

In some embodiments, the negative electrode material layer further optionally includes other additives, for example, a thickener (e.g., sodium carboxymethyl cellulose (CMC-Na)).

In some embodiments, the negative electrode plate may be prepared by: dispersing the above components, such as the negative electrode active material, the conductive agent, the binder and any other component, for preparing the negative electrode plate in a solvent (e.g., deionized water) to form a negative electrode slurry; and coating the negative electrode slurry on the negative electrode current collector, and performing drying and cold pressing processes to obtain the negative electrode plate.

### [Positive electrode plate]

The secondary battery provided in the present application may include a positive electrode plate, the positive electrode plate typically includes a positive electrode current collector and a positive electrode material layer arranged on at least one surface of the positive electrode current collector. As an example, the positive electrode current collector has two opposite surfaces in its own thickness direction, and the positive electrode material layer is arranged on either or both of the opposite surfaces of the positive electrode current collector.

In some embodiments, the positive electrode current collector may be a metal foil current collector or a composite current collector. For example, an aluminum foil may be used as the metal foil. The composite current collector may include a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode material layer may further include a positive electrode active material. The positive electrode active material may be a positive electrode active material for the battery well-known in the art. As an example, the positive electrode active material may include at least one of the following materials: a lithium-containing phosphate of olivine structure, a lithium transition metal oxide, and their respective modified compounds thereof. However, the present application is not limited to these materials, and other conventional materials useful as positive electrode active materials for batteries can also be used. These positive electrode active materials may be used alone or in combination of two or more thereof. Examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{o.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and a modified compound thereof. Examples of lithium-containing phosphates of olivine structure may include, but are not limited to, at least one of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode material layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode material layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared by: dispersing the above components, such as the positive electrode active material, the conductive agent, the binder, and any other component, for preparing the positive electrode plate in a solvent (e.g., N-methyl pyrrolidone) to form a positive electrode slurry; and applying the positive electrode slurry on the positive electrode current collector, drying, and cold pressing, to obtain the positive electrode plate.

### [Separator]

In some embodiments, the secondary battery further includes a separator. The type of the separator is not particularly limited in the present application, and any well-known separator with a porous structure having good chemical stability and mechanical stability may be selected.

In some embodiments, the material of the separator may be selected from at least one of glass fiber, nonwoven cloth, polyethylene, polypropylene, and polyvinylidene fluoride. The separator may be either a single-layer thin film or a multilayer composite thin film without special limitations. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery may include an outer package. The outer packaging can be used for encapsulating the above electrode assembly and electrolyte.

In some embodiments, the outer package of the secondary battery may be a hard case, such as a hard plastic case, an aluminum case, a steel case, and the like. The outer package of the secondary battery may also be a soft pack, such as a pouch. The material of the soft pack may be a plastic, and examples of the plastic may include polypropylene, polybutylene terephthalate, polybutylene succinate, and the like.

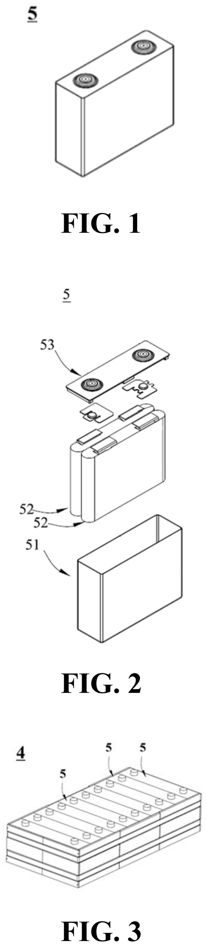

The shape of the secondary battery is not particularly limited in the present application, and may be a cylinder, a square, or any other shape. For example, Fig. 1 shows a secondary battery 5 with a square structure as an example.

In some embodiments, referring to Fig. 2, the outer package may include a case 51 and a cover plate 53. The case 51 may include a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte infiltrates the electrode assembly 52. The number of electrode assemblies 52 included in the secondary battery 5 may be one or more, and may be selected by those skilled in the art according to specific actual requirements.

In some embodiments, the secondary batteries may be assembled into a battery module, the number of secondary batteries included in the battery module may be one or more, and the specific number may be selected by those skilled in the art according to the application and capacity of the battery module.

Fig. 3 shows a battery module 4 as an example. Referring to Fig. 3, in the battery module 4, a plurality of secondary batteries 5 can be sequentially arranged in the length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 are accommodated.

In some embodiments, the above battery modules may be further assembled into a battery pack, the number of battery modules included in the battery pack may be one or more, and the specific number may be selected by those skilled in the art based on the application and capacity of the battery pack.

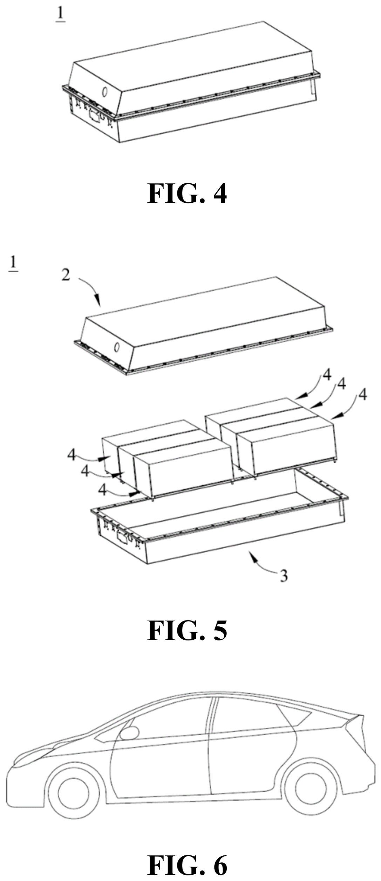

Figs. 4 and 5 show a battery pack 1 as an example. Referring to Figs. 4 and 5, the battery pack 1 may include a battery box and a plurality of battery modules 4 provided in the battery box. The battery box includes an upper box 2 and a lower box 3, wherein the upper box 2 can cover the lower box 3 and forms an enclosed space for accommodating the battery module 4. The plurality of battery modules 4 may be arranged in the battery box in any manner.

In addition, the present application further provides an electrical apparatus, including at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

Fig. 6 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

### Examples

Examples of the present application will be described below. The embodiments described below are illustrative and only used to explain the present application, and cannot be construed as limiting the present application. Where specific techniques or conditions are not specified in the examples, the techniques or conditions described in the literature of the art or the product specifications are followed. Where manufacturers are not specified, the reagents or instruments used are conventional products and are commercially available, and information of other reagents or compounds is recorded in Table 1.

**Table 1**

| Material | Structural formula | CAS number |
|---|---|---|
| 1,6-dideoxy-galactitol | 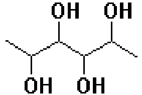 | 25289-20-7 |
| 3,4,5,6-octanetetrol | 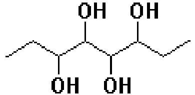 | 2165939-88-6 |
| 2,3,4,5-heptanetetrol | 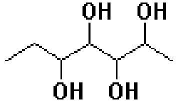 | 2629309-49-3 |
| Compound 8 | 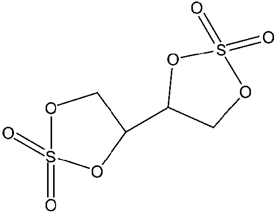 | 1431298-10-0 |
| Compound 9 | 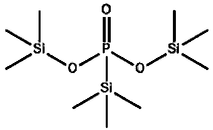 | 213275-37-7 |
| Compound 10 | 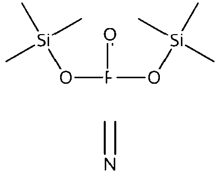 | 74813-43-7 |
| Compound 11 | 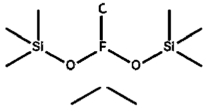 | 97730-12-6 |
| Compound 12 | 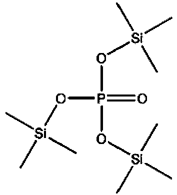 | 234-028-1 |
| Compound 13 | 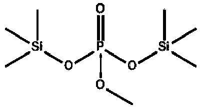 | 18291-81-1 |
| Compound 14 | 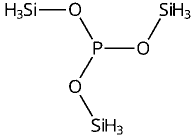 | 80134-90-3 |
| Compound 15 | 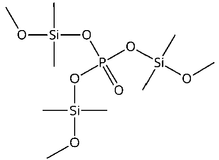 | 2401881-68-1 |
| Compound 16 | 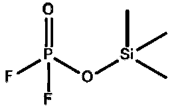 | 4414-25-9 |
| Compound 17 | 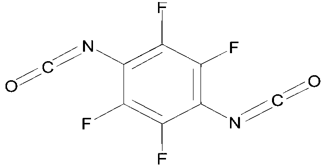 | 822-06-0 |
| Compound 18 | 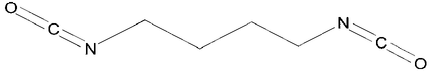 | 4538-37-8 |
| Compound 19 | 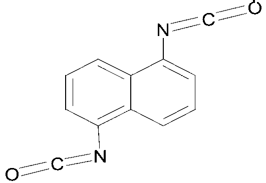 | 221-641-4 |
| Compound 20 | 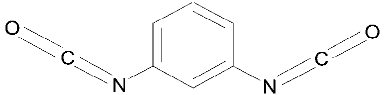 | 123-61-5 |
| Compound 21 | 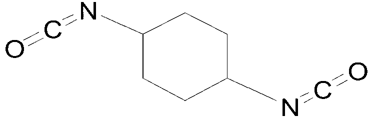 | 2556-36-7 |
| Compound 22 | 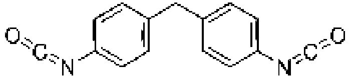 | 101-68-8 |
| Compound 23 | 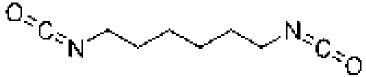 | 822-06-0 |
| Compound 24 | 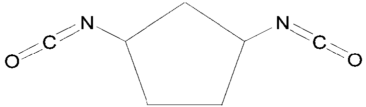 | 7373-22-0 |
| Compound 25 | 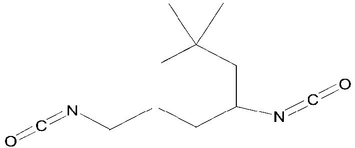 | 223-861-6 |

### Synthesis Examples

The method for preparing the cyclic sulfate compound having the structure represented by the general formula (I) in the present application is referred to the following synthetic route:

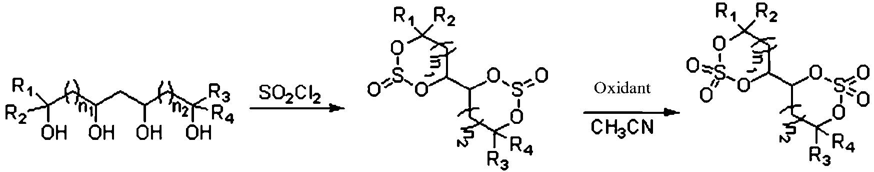

The reaction temperature of the first step was controlled at 30-60°C; the reaction temperature of the second step was controlled at 10-30°C. In the second step, a catalyst such as ruthenium(III) chloride hydrate was used for catalysis, and an oxidant might be sodium hypochlorite, ozone, and the like.

### Synthesis Example 1: Synthesis of compound 1

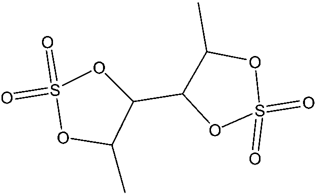

Step 1: Add 300 g (2 mol) of solid 1,6-dideoxy-galactitol into a 5L three-necked flask, start stirring, add 523 g (4.4 mol) of sulfoxide chloride dropwise into the three-necked flask, control the temperature at about 15°C during adding, hold the temperature for reaction for 4h at 45°C after dropwise addition, with a large amount of pasty solid precipitated from a reaction solution; after cooling, slowly add 1L of deionized water, stir to scatter the reaction system quickly, then beat and wash the solid obtained by filtering with deionized water several times until its pH is neutral, followed by drying a filter cake at 60°C under a reduced pressure to obtain an intermediate product 1.

Step 2: Add 184.2 g (0.8 mol) of the intermediate product 1 to a 3L three-necked flask, add 1000 mL of acetonitrile, add 80 mg of ruthenium(III) chloride hydrate catalyst, perform nitrogen replacement for the system, then cool the system to 20°C, start stirring, drop 2000 g of 20% sodium hypochlorite aqueous solution within 1 hour, and control the reaction temperature at 10-20°C; after dropwise addition, stir at 10-20°Cfor 10 min, perform liquid separation, and quench the organic phase with a sodium sulfite aqueous solution until the potassium iodide starch test paper does not turn blue; perform liquid separation again, and concentrate an organic layer to crystallize acetonitrile to obtain a white-powder solid, i.e., the compound 1 mentioned above. 1H-NMR, CD₃CN, δ ppm 5.42-5.39 (m, 2H), 5.36-5.34 (m, 2H), 1.67-1.65 (d, 6H).

### Synthesis Example 2: Synthesis of compound 2

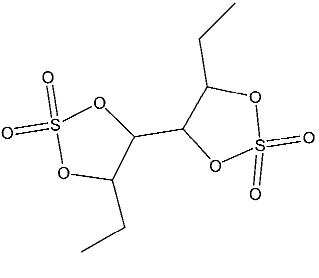

Step 1: Add 356.5 g (2 mol) of solid 3,4,5,6-octanetetrol into a 5L three-necked flask, start stirring, add 523 g (4.4 mol) of sulfoxide chloride dropwise into the three-necked flask, control the temperature at about 15°C during adding, hold the temperature for reaction for 4h at 45°C after dropwise addition, with a large amount of pasty solid precipitated from a reaction solution; after cooling, slowly add 1L of deionized water, stir to scatter the reaction system quickly, then beat and wash the solid obtained by filtering with deionized water several times until its pH is neutral, followed by drying a filter cake at 60°C under a reduced pressure to obtain an intermediate product 2.

Step 2: Add 216.2 g (0.8 mol) of the intermediate product 2 to a 3L three-necked flask, add 1000 mL of acetonitrile, add 80 mg of ruthenium(III) chloride hydrate catalyst, perform nitrogen replacement for the system, then cool the system to 20°C, start stirring, drop 2000 g of 20% sodium hypochlorite aqueous solution within 1 hour, and control the reaction temperature at 10-20°C; after dropwise addition, stir at 10-20°Cfor 10 min, perform liquid separation, and quench the organic phase with a sodium sulfite aqueous solution until the potassium iodide starch test paper does not turn blue; perform liquid separation again, and concentrate an organic layer to crystallize acetonitrile to obtain the compound 2.

### Synthesis Example 3: Synthesis of compound 3

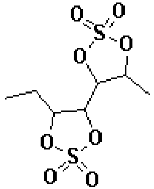

Step 1: Add 328.4 g (2 mol) of solid 2,3,4,5-heptanetetrol into a 5L three-necked flask, start stirring, add 523 g (4.4 mol) of sulfoxide chloride dropwise into the three-necked flask, control the temperature at about 15°C during adding, hold the temperature for reaction for 4h at 45°C after dropwise addition, with a large amount of pasty solid precipitated from a reaction solution; after cooling, slowly add 1L of deionized water, stir to scatter the reaction system quickly, then beat and wash the solid obtained by filtering with deionized water several times until its pH is neutral, followed by drying a filter cake at 60°Cunder a reduced pressure to obtain an intermediate product 3.

Step 2: Add 205 g (0.8 mol) of the intermediate product 3 to a 3L three-necked flask, add 1000 mL of acetonitrile with stirring until the solid was completely dissolved, add 80 mg of ruthenium(III) chloride hydrate catalyst, perform nitrogen replacement for the system, then cool the system to 20°C, start stirring, drop 2000 g of 20% sodium hypochlorite aqueous solution within 1 hour, and control the reaction temperature at 10-20°C; after dropwise addition, stir at 10-20°Cfor 10 min, perform liquid separation, and quench the organic phase with a sodium sulfite aqueous solution until the potassium iodide starch test paper does not turn blue; perform liquid separation again, and concentrate an organic layer to crystallize acetonitrile to obtain the compound 3 (163.1g, yield 82.8%).

In addition, the following compound was synthesized by a method with reference to that in Synthesis Example 1, wherein the corresponding substrate in Table 2 was used to substitute 1,6- dideoxy-galactitol.

**Table 2**

| Compound | Chemical formula | Substrate | Compound LC-MS |
|---|---|---|---|
| 4 | 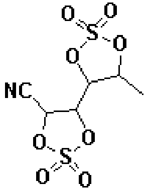 | 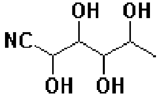 CAS number: 7460-93-7 | 285.25 |

### Synthesis Example 4: Synthesis of compound 5

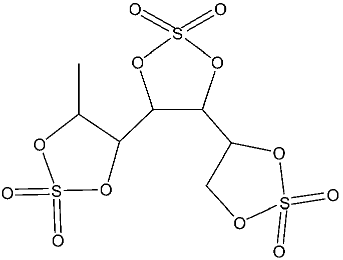

Step 1: Add 392.4 g (2 mol) of solid 1,2,3,4,5,6-heptanehexanol into a 5L three-necked flask, start stirring, add 784.5 g (6.6 mol) of sulfoxide chloride dropwise into the three-necked flask, control the temperature at about 15°C during adding, hold the temperature for reaction for 4h at 45°C after dropwise addition, with a large amount of pasty solid precipitated from a reaction solution; after cooling, slowly add 1L of deionized water, stir to scatter the reaction system quickly, then beat and wash the solid obtained by filtering with deionized water several times until its pH is neutral, followed by drying a filter cake at 60°Cunder a reduced pressure to obtain an intermediate product 4.

Step 2: Add 140 g (0.4 mol) of the intermediate product 4 to a 4L three-necked flask, add 1000 mL of acetonitrile, add 110 mg of ruthenium(III) chloride hydrate catalyst, perform nitrogen replacement for the system, then cool the system to 20°C, start stirring, drop 1500 g of 20% sodium hypochlorite aqueous solution within 1 hour, and control the reaction temperature at 10-20°C; after dropwise addition, stir at 10-20°Cfor 10 min, perform liquid separation, and quench the organic phase with a sodium sulfite aqueous solution until the potassium iodide starch test paper does not turn blue; perform liquid separation again, and concentrate an organic layer to crystallize acetonitrile to obtain the compound 5.

In addition, the following compound was synthesized by a method with reference to that in Synthesis Example 4, wherein the corresponding substrate in Table 3 was used to substitute 1,2,3,4,5,6-heptanehexanol.

**Table 3**

| Compound | Chemical formula | Substrate | Compound LC-MS |
|---|---|---|---|
| 6 | 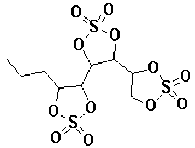 | 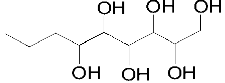 CAS number: 2236586-56-2 | 410.38 |

### Synthesis Example 5: Synthesis of compound 7

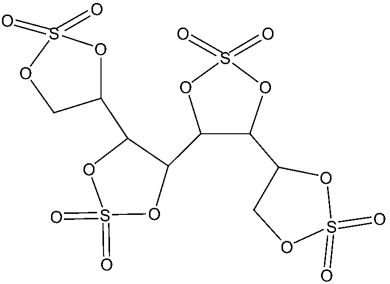

Step 1: Add 484 g (2 mol) of solid octitol into a 5L three-necked flask, start stirring, add 1046 g (8.8 mol) of sulfoxide chloride dropwise into the three-necked flask, control the temperature at about 15°C during adding, hold the temperature for reaction for 4h at 45°C after dropwise addition, with a large amount of pasty solid precipitated from a reaction solution; after cooling, slowly add 1L of deionized water, stir to scatter the reaction system quickly, then beat and wash the solid obtained by filtering with deionized water several times until its pH is neutral, followed by drying a filter cake at 60°Cunder a reduced pressure to obtain an intermediate product 5.

Step 2: Add 183.2 g (0.4 mol) of the intermediate product 5 to a 4L three-necked flask, add 1000 mL of acetonitrile, add 150 mg of ruthenium(III) chloride hydrate catalyst, perform nitrogen replacement for the system, then cool the system to 20°C, start stirring, drop 2000 g of 20% sodium hypochlorite aqueous solution within 1 hour, and control the reaction temperature at 10-20°C; after dropwise addition, stir at 10-20°Cfor 10 min, perform liquid separation, and quench the organic phase with a sodium sulfite aqueous solution until the potassium iodide starch test paper does not turn blue; perform liquid separation again, and concentrate an organic layer to crystallize acetonitrile to obtain the compound 7.

### Example 1

Electrolyte composition: Compound 1 was used as a first additive with a mass content of 2% in the electrolyte; compound 12 was used as a second additive with a mass content of 2% in the electrolyte; LiPF₆ was used as an electrolyte salt with a content of 10% in the electrolyte, and a mixture of EC+EMC (ethylene carbonate + ethyl methyl carbonate) with a volume ratio of 3:7 was used as a solvent.

### Preparation of positive electrode plate:

A positive electrode active material lithium iron phosphate (LiFePO₄), a conductive agent acetylene black and a binder polyvinylidene fluoride (PVDF) were dissolved in a solvent N-methylpyrrolidone (NMP) according to a mass ratio of 90:5:5, and stirred and mixed sufficiently to obtain a positive electrode slurry; thereafter, the positive electrode slurry was evenly applied on a positive electrode current collector, followed by oven drying, cold pressing and slitting to obtain a positive electrode plate.

### Preparation of negative electrode plate:

A negative electrode active material graphite (with the average particle size Dv50 of 10 µm), a conductive agent carbon black, a binder styrene-butadiene rubber (SBR), and a thickener sodium carboxymethylcellulose (CMC-Na) were dissolved in a solvent deionized water according to a weight ratio of 90:4:4:2, and then mixed uniformly to obtain a negative electrode slurry; the negative slurry was uniformly applied on the a copper foil of a negative electrode current collector once or more times, followed by oven drying, cold pressing, and slitting to obtain a negative electrode plate. The coating weight per unit area (CW) of the negative electrode plate was 8 mg/cm².

Dv50 of the positive electrode active material refers to the particle size of the negative electrode active material when its cumulative volume percentage reaches 50%, i.e., the median particle size of the volume distribution in µm. Dv50 may be measured by instruments and methods known in the art. For example, a laser diffraction particle size distribution analyzer (Malvern Mastersizer 3000) from Malvern Instruments Ltd. in the UK was used for testing, and Dv50 was obtained by measuring the particle size distribution according to Particle Size Analysis - Laser Diffraction Methods GB/T19077-2016.

The porosity of the negative electrode material layer in the negative electrode plate was 39%.

The porosity Pₙ of the negative electrode plate may be obtained by a gas filling method. For example, He gas may be filled into the pores of the negative electrode plate to measure real volume V₂ of the negative electrode plate; then, apparent volume_{V1}of the negative electrode plate can be calculated based on the coating weight of the negative electrode plate and the compacted density of the negative electrode plate, thus the porosity _{Pn} of the negative electrode plate is = (_{V1}-_{V2})/_{V1}×100%

### Separator:

A conventional polypropylene film was used as the separator.

### Assembly of lithium-ion battery:

The positive electrode plate, the separator and the negative electrode plate were stacked sequentially, wherein the separator was positioned between the positive electrode plate and the negative electrode plate to separate them, and then the positive electrode, the separator and the negative electrode plate were wound to obtain an electrode assembly; the electrode assembly was put into a battery case and dried, and then injected with the electrolyte, followed by processes such as chemical formation and standing to obtain a lithium-ion battery.

### Example 2-1

Compound 2 was used to replace Compound 1 as the first additive, and the rest was the same as in Example 1.

### Example 2-2

Compound 3 was used to replace Compound 1 as the first additive, and the rest was the same as in Example 1.

### Example 2-3

Compound 4 was used to replace Compound 1 as the first additive, and the rest was the same as in Example 1.

### Example 2-4

Compound 5 was used to replace Compound 1 as the first additive, and the rest was the same as in Example 1.

### Example 2-5

Compound 6 was used to replace Compound 1 as the first additive, and the rest was the same as in Example 1.

### Example 2-6

Compound 7 was used to replace Compound 1 as the first additive, and the rest was the same as in Example 1.

### Example 3-1

The mass content of the first additive compound 1 was adjusted to 0.001%, and the rest was the same as in Example 1.

### Example 3-2

The mass content of the first additive compound 1 was adjusted to 0.01%, and the rest was the same as in Example 1.

### Example 3-3

The mass content of the first additive compound 1 was adjusted to 4%, and the rest was the same as in Example 1.

### Example 3-4

The mass content of the first additive compound 1 was adjusted to 8%, and the rest was the same as in Example 1.

### Example 3-5

The mass content of the first additive compound 1 was adjusted to 15%, and the rest was the same as in Example 1.

### Example 4-1

Compound 9 was used to replace Compound 12 as the second additive, and the rest was the same as in Example 1.

### Example 4-2

Compound 10 was used to replace Compound 12 as the second additive, and the rest was the same as in Example 1.

### Example 4-3

Compound 11 was used to replace Compound 12 as the second additive, and the rest was the same as in Example 1.

### Example 4-4

Compound 13 was used to replace Compound 12 as the second additive, and the rest was the same as in Example 1.

### Example 4-5

Compound 14 was used to replace Compound 12 as the second additive, and the rest was the same as in Example 1.

### Example 4-6

Compound 15 was used to replace Compound 12 as the second additive, and the rest was the same as in Example 1.

### Example 4-7

Compound 16 was used to replace Compound 12 as the second additive, and the rest was the same as in Example 1.

### Example 4-8

Compound 17 was used to replace Compound 12 as the second additive, and the rest was the same as in Example 1.

### Example 4-9

Compound 18 was used to replace Compound 12 as the second additive, and the rest was the same as in Example 1.

### Example 4-10

Compound 19 was used to replace Compound 12 as the second additive, and the rest was the same as in Example 1.

### Example 4-11

Compound 20 was used to replace Compound 12 as the second additive, and the rest was the same as in Example 1.

### Example 4-12

Compound 21 was used to replace Compound 12 as the second additive, and the rest was the same as in Example 1.

### Example 4-13

Compound 22 was used to replace Compound 12 as the second additive, and the rest was the same as in Example 1.

### Example 4-14

Compound 23 was used to replace Compound 12 as the second additive, and the rest was the same as in Example 1.

### Example 4-15

Compound 24 was used to replace Compound 12 as the second additive, and the rest was the same as in Example 1.

### Example 4-16

Compound 25 was used to replace Compound 12 as the second additive, and the rest was the same as in Example 1.

### Example 5-1

The mass content of the second additive compound 12 was adjusted to 0.005%, and the rest was the same as in Example 1.

### Example 5-2

The mass content of the second additive compound 12 was adjusted to 0.05%, and the rest was the same as in Example 1.

### Example 5-3

The mass content of the second additive compound 12 was adjusted to 0.2%, and the rest was the same as in Example 1.

### Example 5-4

The mass content of the second additive compound 12 was adjusted to 4%, and the rest was the same as in Example 1.

### Example 5-5

The mass content of the second additive compound 12 was adjusted to 6%, and the rest was the same as in Example 1.

### Example 5-6

The mass content of the second additive compound 12 was adjusted to 9%, and the rest was the same as in Example 1.

### Example 5-7

The mass content of the second additive compound 12 was adjusted to 12%, and the rest was the same as in Example 1.

### Example 6-1

The porosity of the negative electrode material layer in the negative electrode plate was adjusted to 25%, and the rest was the same as in Example 1.

### Example 6-2

The porosity of the negative electrode material layer in the negative electrode plate was adjusted to 35%, and the rest was the same as in Example 1.

### Example 6-3

The porosity of the negative electrode material layer in the negative electrode plate was adjusted to 40%, and the rest was the same as in Example 1.

### Example 6-4

The porosity of the negative electrode material layer in the negative electrode plate was adjusted to 44%, and the rest was the same as in Example 1.

### Example 6-5

The porosity of the negative electrode material layer in the negative electrode plate was adjusted to 48%, and the rest was the same as in Example 1.

### Example 7-1

The average particle size Dv50 of the negative electrode active material was adjusted to 3 µm, and the rest was the same as in Example 1.

### Example 7-2

The average particle size Dv50 of the negative electrode active material was adjusted to 6 µm, and the rest was the same as in Example 1.

### Example 7-3

The average particle size Dv50 of the negative electrode active material was adjusted to 8 µm, and the rest was the same as in Example 1.

### Example 7-4

The average particle size Dv50 of the negative electrode active material was adjusted to 15 µm, and the rest was the same as in Example 1.

### Example 7-5

The average particle size Dv50 of the negative electrode active material was adjusted to 20 µm, and the rest was the same as in Example 1.

### Example 7-6

The average particle size Dv50 of the negative electrode active material was adjusted to 25 µm, and the rest was the same as in Example 1.

### Example 7-7

The average particle size Dv50 of the negative electrode active material was adjusted to 28 µm, and the rest was the same as in Example 1.

### Example 8-1

The coating weight per unit area (CW) of the negative electrode plate was adjusted to 1.5 mg/cm², and the rest was the same as in Example 1.

### Example 8-2

The coating weight per unit area (CW) of the negative electrode plate was adjusted to 3 mg/cm², and the rest was the same as in Example 1.

### Example 8-3

The coating weight per unit area (CW) of the negative electrode plate was adjusted to 6 /cm², and the rest was the same as in Example 1.

### Example 8-4

The coating weight per unit area (CW) of the negative electrode plate was adjusted to 12 mg/cm², and the rest was the same as in Example 1.

### Example 8-5

The coating weight per unit area (CW) of the negative electrode plate was adjusted to 15 mg/cm², and the rest was the same as in Example 1.

### Comparative Example 1-1

Compound 1 as the first additive was removed, and the rest was the same as in Example 1.

### Comparative Example 1-2

Compound 12 as the second additive was removed, and the rest was the same as in Example 1.

### Comparative Example 1-3

Compound 8 was used to replace Compound 1 as the first additive, and the rest was the same as in Example 1.

### Performance test:

### 1) Test for cycling performance at 60°C

At 60°C, the batteries of the above examples and comparative examples were charged at a constant current of 1C to a voltage of 3.65V, then charged at a constant voltage of 3.65V until the current was ≤0.05C, and then discharged at a constant current of 1C to a voltage of 2.5V, which is one charge and discharge cycle. The discharge capacity at this point was recorded as the discharge capacity of the battery at the first cycle. The charge and discharge cycles were repeated in this manner, and the capacity retention rate of the battery after 500 cycles was calculated.

The capacity retention rate (%) of the battery after 500 cycles at 60°C = (the discharge capacity of the battery at the 500th cycle/the discharge capacity of the battery at the first cycle) × 100%.

### 2) Test for storage capacity retention rate at 60°C

At 25°C, the batteries of the above examples and comparative examples were charged at a constant current of 0.33C to a voltage of 3.65V, then charged at a constant voltage of 3.65V to a current ≤0.05C; the battery was discharged at a constant current of 0.33C to a voltage of 2.5V. The actual discharge capacity of the battery was recorded as C₀.

At 25°C, each of the batteries was further charged at a constant current of 0.33C₀ to a voltage of 3.65V, and then charged at a constant voltage of 3.65V to a current of ≤0.05C0. At this point, the battery was fully charged. The fully charged battery was stored in a thermostat at 60°C for 60 days, and the battery was then taken out for capacity testing.

The capacity retention rate of the battery after being stored at 60°C for 60 days=(the discharge capacity of the battery after being stored for 60 days/the actual discharge capacity C0 of the battery)×100%.

The results are shown in Table 4.

**Table 4**

| | Capacity retention rate after 500 cycles at 60°C | Capacity retention rate after storage at 60°C for 60 davs |
|---|---|---|
| Example 1 | 88.6% | 90.6% |
| Example 2-1 | 84.6% | 88.3% |
| Example 2-2 | 85.0% | 87.2% |
| Example 2-3 | 83.2% | 85.1% |
| Example 2-4 | 81.6% | 87.3% |
| Example 2-5 | 80.2% | 85.6% |
| Example 2-6 | 80.9% | 86.3% |
| Example 3-1 | 62.5% | 78.3% |
| Example 3-2 | 65.8% | 79.7% |
| Example 3-3 | 85.2% | 88.0% |
| Example 3-4 | 81.7% | 85.3% |
| Example 3-5 | 66.1% | 70.4% |
| Example 4-1 | 78.5% | 86.5% |
| Example 4-2 | 81.2% | 87.1% |
| Example 4-3 | 76.8% | 86.4% |
| Example 4-4 | 84.6% | 87.0% |
| Example 4-5 | 86.3% | 88.1% |
| Example 4-6 | 79.8% | 86.4% |
| Example 4-7 | 82.6% | 87.3% |
| Example 4-8 | 82.0% | 87.6% |
| Example 4-9 | 87.5% | 89.6% |
| Example 4-10 | 84.7% | 88.5% |
| Example 4-11 | 85.0% | 88.7% |
| Example 4-12 | 83.3% | 86.8% |
| Example 4-13 | 86.3% | 87.9% |
| Example 4-14 | 87.3% | 88.5% |
| Example 4-15 | 81.9% | 87.2% |
| Example 4-16 | 84.3% | 87.6% |
| Example 5-1 | 73.5% | 86.2% |
| Example 5-2 | 76.5% | 86.5% |
| Example 5-3 | 80.1% | 87.3% |
| Example 5-4 | 83.9% | 90.1% |
| Example 5-5 | 85.7% | 89.7% |
| Example 5-6 | 81.3% | 88.2% |
| Example 5-7 | 75.4% | 86.3% |
| Example 6-1 | 67.2% | 77.2% |
| Example 6-2 | 76.5% | 82.5% |
| Example 6-3 | 88.4% | 90.5% |
| Example 6-4 | 83.6% | 89.8% |
| Example 6-5 | 81.4% | 89.0% |
| Example 7-1 | 65.4% | 78.0% |
| Example 7-2 | 70.9% | 79.5% |
| Example 7-3 | 73.2% | 87.1% |
| Example 7-4 | 77.3% | 88.4% |
| Example 7-5 | 81.2% | 86.8% |
| Example 7-6 | 85.7% | 84.2% |
| Example 7-7 | 80.7% | 80.3% |
| Example 8-1 | 91.9% | 87.3% |
| Example 8-2 | 91.2% | 87.6% |
| Example 8-3 | 91.0% | 88.1% |
| Example 8-4 | 87.1% | 77.8% |
| Example 8-5 | 83.8% | 70.2% |
| Comparative Example 1-1 | 60.2% | 75.2% |
| Comparative Example 1-2 | 72.6% | 86.2% |
| Comparative Example 1-3 | 77.5% | 79.4% |

It can be seen from the results of Examples 1 and 2-1 to 2-6 and Comparative Examples 1-1 and 1-3 that the introduction of the cyclic sulfate additive can effectively improve the cycle and storage performance of the battery cell at high temperatures. It also shows that compared with a conventional sultone additive, the additive has the advantage of enabling the SEI generated on the negative electrode to have lower interface impedance and higher stability at high temperatures.

As seen from the comparison between Examples 1 and 4-1 to 4-16 and Comparative Example 1-2, the introduction of the second additive can effectively improve the cycle and storage performance of the battery cell at high temperatures, because at high temperatures, LiPF₆ is prone to decomposition to produce HF, causing continuous damage to the SEI. The introduction of the alkane phosphate or isocyanate additive reduces the acid content in the electrolyte and prolong the cycle and storage life of the battery at high temperatures.

It can be seen from the results of Examples 3-1 to 3-5 that too little first additive does not have a significant improvement effect, and too much first additive may generate a thick SEI on the negative electrode, resulting in the increase in polarization of the battery cell, which will deteriorate the cycle and storage performance at high temperatures to a certain extent. When the mass percent of the cyclic sulfonate additive of the present application in the electrolyte is within the above preferred range, the battery cell will have good cycle and storage performance.

It can be seen from the results of Examples 5-1 to 5-7 that too little second additive does not have a significant improvement effect, and too much second additive will deteriorate the cycle and storage performance at high temperatures. When the mass percent of the second additive of the present application in the electrolyte is within the above preferred range, the battery cell will have good cycle and storage performance.

It can be seen from the results of Examples 6-1 to 6-5 that when the porosity of the negative electrode material layer on the electrode plate is too small, the particle structure of the negative electrode active material is squeezed and damaged, the electrolyte infiltration is difficult, the polarization is increased, and the long-term cycling performance of the battery cell is deteriorated. When the porosity of the negative electrode active material coating of the present application is within the above preferred range, the battery cell may have excellent performance at high temperatures.

It can be seen from the results of Examples 7-1 to 7-9 that when Dv50 of the negative electrode active material is too small, it results in an excessively large specific surface area, which may cause the battery to have more contact with the electrolyte and lead to more violent side reactions. As by-products accumulates on the surface of the battery, the negative electrode impedance is increased, thereby the capacity loss of the battery in cycling at high temperatures. When Dv50 of the negative electrode active material is within the above preferred range, the battery may have better performance.

It can be seen from the results of Examples 8-1 to 8-5 that the smaller the coating weight per unit area of the negative electrode plate, the better the kinetic performance of the battery. However, in order to satisfy requirements for energy density, a smaller coating weight needs a larger coating area, which increases the manufacturing cost of the battery. Excessive coating weight will impede the electrolyte transmission rate, thereby affecting the cycle and storage performance of the battery. Therefore, when the coating weight per unit area of the negative electrode plate is within the above preferred range, the energy density and performance of the battery is not affected in the case of the battery having good kinetic performance.

Although the present application has been described with reference to the preferred embodiments, various improvements can be made thereto and components thereof can be replaced with equivalents without departing from the scope of the present application. In particular, the technical features mentioned in the various embodiments can be combined in any manner as long as there is no structural conflict. The present application is not limited to the particular embodiments disclosed herein, but includes all technical solutions falling within the scope of the claims.

## Claims

**1.** A non-aqueous electrolyte comprising a first additive and a second additive, wherein the first additive is a cyclic sulfate compound having a structure represented by general formula (I), 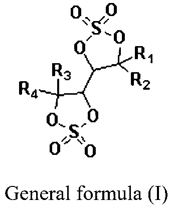 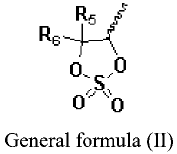
in the general formula (I), R₁, R₂, R₃ and R₄ are each independently selected from any one of a group having a structure represented by general formula (II), a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group, and
in the general formula (II), R₅ and R₆ are each independently selected from any one of a group having the structure represented by the general formula (II), a hydrogen atom, a halogen atom, a C1-C6 alkyl group, a C1-C6 haloalkyl group, a C1-C6 alkoxy group, a C1-C6 haloalkoxy group, a C2-C6 alkenyl group, a C2-C6 ester group, a cyano group and a sulfonic acid group;
R₁ and R₂ are not both hydrogen atoms and R₃ and R₄ are not both hydrogen atoms;
the second additive is selected from a phosphate compound, an isocyanate compound or a combination thereof;
the phosphate compound has a structure represented by general formula (III): 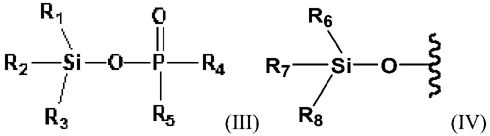
in the general formula (III), R₁, R₂, R₃, R₄ and R₅ are each independently selected from any one of a group having a structure represented by general formula (IV), a hydrogen atom, a C1-C6 alkyl group, a halogen atom, a C1-C6 haloalkyl group, a C1-C6 alkoxy group, a C1-C6 haloalkoxy group, a C6-C10 aryl group, a C2-C6 alkenyl group, a C2-C6 ester group, a cyano group, a hydroxy group, a sulfonic acid group, and a tris(C1-C6 alkyl)silyl group;
in the general formula (IV), R₆, R₇, and R₈ are each independently selected from any one of a hydrogen atom, a C1-C6 alkyl group, a halogen atom, a C1-C6 haloalkyl group, a C1-C6 alkoxy group, a C1-C6 haloalkoxy group, a C6-C10 aryl group, a C2-C6 alkenyl group, a C2-C6 ester group, a cyano group, and a sulfonic acid group;
the isocyanate compound has a structure represented by general formula (V): 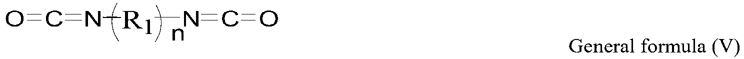
in the general formula (V), R₁ is selected from the following groups which are unsubstituted or substituted by one or more Rₐ: a C2-C10 alkylene group, a C2-C10 heteroalkylene group, a C6-C18 arylene group, a C2-C18 heteroarylene group, a C3-C18 alicyclylene group, and a C3-C18 heteroalicyclylene group,
the one or more Rₐ are each independently selected from a halogen atom, -CN, -NCO, -OH, -COOH, -SOOH, a C2-C10 ester group, a C1-C10 alkyl group, a C2-C10 alkenyl group, a C2-C10 alkynyl group, and a C2-C10 alkoxy group; and
in the general formula (V), n is 1, 2 or 3.

**2.** The non-aqueous electrolyte of claim 1, wherein in the cyclic sulfate compound, R¹, R², R³ and R⁴ are each independently selected from any one of a group having a structure represented by the general formula (II), a hydrogen atom, a halogen atom, a C1-C3 alkyl group, a C1-C3 haloalkyl group, a C1-C3 alkoxy group, a C1-C3 haloalkoxy group, a C2-C3 alkenyl group, a C2-C3 ester group, a cyano group and a sulfonic acid group,
in the cyclic sulfate compound, R⁵ and R⁶ are each independently selected from any one of a hydrogen atom, a halogen atom, a C1-C3 alkyl group, a C1-C3 haloalkyl group, a C1-C3 alkoxy group, a C1-C3 haloalkoxy group, a C2-C3 alkenyl group, a C2-C3 ester group, a cyano group and a sulfonic acid group;
optionally, in the cyclic sulfate compound, R¹, R², R³ and R⁴ are each independently selected from any one of a group having a structure represented by the general formula (II), a hydrogen atom, a halogen atom, a C1-C3 alkyl group and a cyano group;
optionally, in the cyclic sulfate compound, R⁵ and R⁶ are each independently selected from any one of a hydrogen atom and a C1-C3 alkyl group;
optionally, in the cyclic sulfate compound, R¹, R², R³ and R⁴ are each independently selected from any one of a group having a structure represented by the general formula (II), a hydrogen atom, an F atom, a Cl atom, a Br atom, a methyl group, an ethyl group, a propyl group, an isopropyl group and a cyano group;
optionally, in the cyclic sulfate compound, R⁵ and R⁶ are each independently selected from any one of a hydrogen atom, a methyl group, an ethyl group, a propyl group and an isopropyl group;
optionally, the group having the structure represented by the general formula (II) is selected from any one of the following groups: 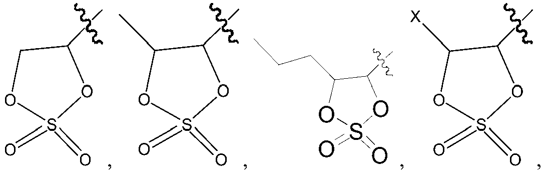 wherein X is an F atom, a Cl atom or a Br atom;
optionally, the group having the structure represented by the general formula (II) is selected from any one of the following groups: 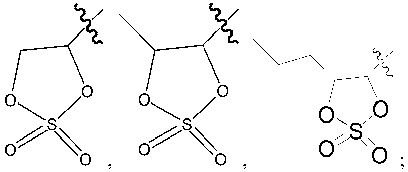
optionally, the cyclic sulfate compound is selected from any one or more of the following compounds:

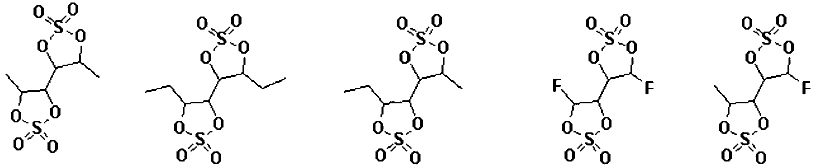

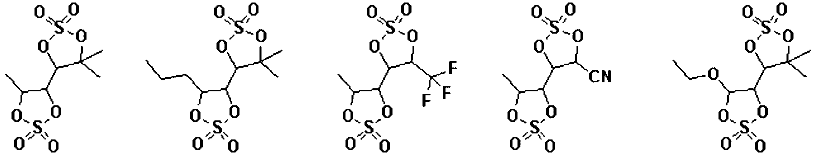

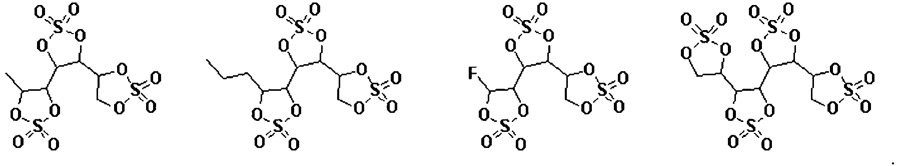

**5.** The non-aqueous electrolyte of any one of claims 1 to 4, wherein mass content of the cyclic sulfate compound is W1, wherein 0.005%≤W1≤10%, and optionally 0.05%≤W1≤5%.

**6.** The non-aqueous electrolyte of any one of claims 1 to 5, wherein in the phosphate compound, R₁, R₂, R₃, R₄ and R₅ are each independently selected from any one of a group having a structure represented by the general formula (IV), a hydrogen atom, a C1-C3 alkyl group, a halogen atom, a C1-C3 haloalkyl group, a C1-C3 alkoxy group, a C1-C3 haloalkoxy group, a C6-C10 aryl group, a C2-C3 alkenyl group, a C2-C3 ester group, a cyano group, a hydroxy group, a sulfonic acid group and a tris(C1-C3 alkyl)silyl group;
in the general formula (IV), R₆, R₇ and R₈ are each independently selected from any one of a hydrogen atom, a C1-C3 alkyl group, a halogen atom, a C1-C3 haloalkyl group, a C1-C3 alkoxy group, a C1-C3 haloalkoxy group, a C6-C10 aryl group, a C2-C3 alkenyl group, a C2-C3 ester group, a cyano group and a sulfonic acid group;
optionally, in the phosphate compound, R₁, R₂, R₃, R₄ and R₅ are each independently selected from any one of a group having a structure represented by the general formula (IV), a hydrogen atom, a C1-C3 alkyl group, a halogen atom, a C1-C3 alkoxy group and a tri(C1-C3 alkyl)silyl group;
optionally, in the general formula (IV), R₆, R₇ and R₈ are each independently selected from any one of a hydrogen atom, a C1-C3 alkyl group and a C1-C3 alkoxy group;
optionally, the group having the structure represented by the general formula (IV) is selected from any one of the following groups: 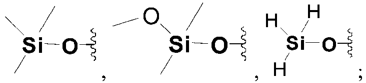
optionally, the phosphate compound is selected from any one or more of the following compounds:

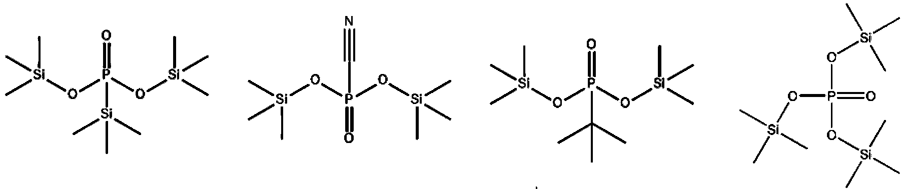

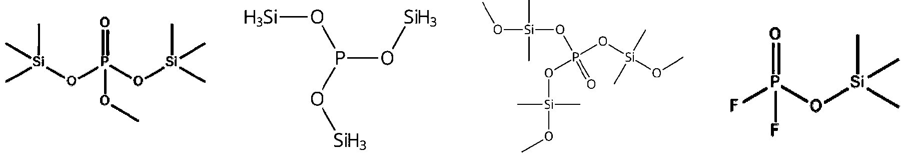

**7.** The non-aqueous electrolyte of any one of claims 1 to 6, wherein in the isocyanate compound, R₁ is selected from the following groups which are unsubstituted or substituted by one or more Rₐ: a C2-C6 alkylene group, a C2-C6 heteroalkylene group, a C6-C10 arylene group, a C2-C10 heteroarylene group, a C4-C6 alicyclylene group and a C4-C6 heteroalicyclylene group,
optionally, the one or more Rₐ are each independently selected from a halogen atom, -CN, -NCO, -OH, - COOH, -SOOH, a C2-C6 ester group, a C1-C6 alkyl group, a C2-C6 alkenyl group, a C2-C6 alkynyl group and a C2-C6 alkoxy group;
optionally, the one or more Rₐ are each independently selected from a halogen atom, -CN, -NCO, -OH, - COOH, -SOOH, a C2-C3 ester group, a C1-C3 alkyl group, a C2-C3 alkenyl group, a C2-C3 alkynyl group and a C2-C3 alkoxy group;
optionally, in the isocyanate compound, R₁ is selected from the following groups which are unsubstituted or substituted by one or more Rₐ: a C2-C6 alkylene group, a C6-C10 arylene group and a C4-C6 alicyclylene group,
the one or more Rₐ are each independently selected from a halogen atom and a C1-C3 alkyl group; and
optionally, the isocyanate compound is selected from any one or more of the following compounds:

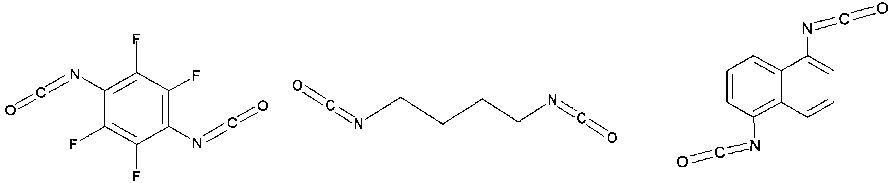

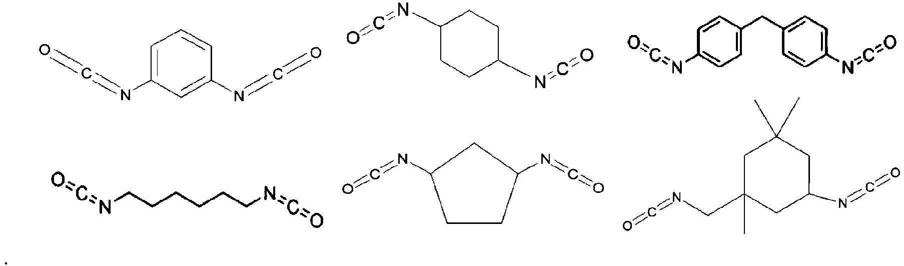

**8.** The non-aqueous electrolyte of any one of claims 1 to 7, wherein mass content of the second additive in the non-aqueous electrolyte is W2, wherein 0.01%≤W2≤10%, optionally 0.1%≤W2≤8%, and further optionally 0.3%≤W2≤5%.

**9.** A secondary battery, comprising the non-aqueous electrolyte of any one of claims 1 to 8, and further comprising a positive electrode plate and a negative electrode plate, wherein the negative electrode plate comprises a negative electrode material layer comprising a negative electrode active material.

**10.** The secondary battery of claim 9, wherein the negative electrode material layer has a porosity of 30-45%, and optionally 37-42%.

**11.** The secondary battery of claim 9 or 10, wherein the negative electrode active material has an average particle size Dv50 of 3-25 µm, optionally 5 µm ≤ Dv50 ≤ 20 µm, and further optionally 7 µm ≤ Dv50 ≤ 15 µm.

**12.** The secondary battery of any one of claims 9 to 11, wherein coating weight per unit area of the negative electrode plate is CW, wherein 2 mg/cm² ≤ CW ≤ 13 mg/cm², and optionally, 5 mg/cm² ≤ CW ≤ 10 mg/cm².

**13.** An electrical apparatus, comprising a secondary battery, wherein the secondary battery comprises the secondary battery of any one of claims 9 to 12.
